Europäisches Patentamt

European Patent Office

Office européen des brevets

(19)

(11) Publication number: **0 269 581**
**A1**

(12)

# EUROPEAN PATENT APPLICATION

(21) Application number: 87830375.9

(22) Date of filing: 23.10.87

(51) Int. Cl.⁴: **F 16 B 47/00**
**A 47 F 7/19**

(30) Priority: 24.10.86 IT 5981786

(43) Date of publication of application:
01.06.88 Bulletin 88/22

(84) Designated Contracting States:
AT BE CH DE ES FR GB GR IT LI LU NL SE

(71) Applicant: **EASY ITALY S.d.f. di PERENTIN Alessandro & C.**
**Borgo San Nazario 74**
**I-34017 Prosecco TS (IT)**

(72) Inventor: **Perentin, Alessandro**
**Borgo San Nazario 74**
**I-34017 Prosecco TS (IT)**

(74) Representative: **Zorzut, Ermenegildo**
**Studio Tecnico S.A.I. per. ind. ZORZUT ERMENEGILDO**
**Via Imbriani 2**
**I-34122 Trieste (IT)**

(54) Suction-cup with a pin put in, fitted to prop up some points of support for clothes on transparent or not transparent panels, particularly suitable to prepare shop-windows, shows, etc.

(57) The invention is a suction-cup with a common pin (6), replaceable and protruding, put in a suitable room (5) obtained in the body (1) of the suction-cup itself. The suction-cup is made to be easily tied, in the most rational and quick way, on panel (12) surfaces (of every material, transparent and not transparent). The protruding pin (6) produces a fixing, supporting and hanging point for a cloth or for every other not specified object (to be shown in a shop-window, show, or other, or to be used in house furnishing).

FIG.4

FIG.6

EP 0 269 581 A1

## Description

"Suction-cup with a pin put in, fitted to prop up some points of support for clothes on transparent or not transparent panels, particularly suitable to prepare shop-windows, shows, etc.".

The object of this invention is a suction cup with a pin put in, fitted to prop up some points of support for clothes on transparent or not transparent panels, particularly suitable to prepare shop-windows, shows etc.

It is useful remember and point out the importance and the validity of the preparation and the fitting out of a shop-window. Usually, the preparation of shop-windows, shows, exhibition stands, shows of every kind and particularly in the clothing and in the house furnishing fields, it's possible to need to hang the articles on exhibition in order to give to the beholder a sensation of lightness, or to hint or underline a particular collection and peculiarity of the articles.

The whole, of course, aims creating a certain emotion and interest in the beholder and in the potentially buyers, so an accurate, welldone and suggestive window-dressing becomes an important element to give rise to the success of a certain activity or enterprise.

This has, moreover, a particular importance in a very specialized field, such as the clothing field, where a great part of the work is concentrated in obtaining a certain visual effect that strikes immediately the eye; this effect then has to change continually, adapting itself to the change of the taste and of the fashion. In creating these sensations, a great part of the merit is for the fantasy and cleverness of the window dresser who, on the contrary, hasn't efficacions means or prepared equipment that allow him to obtain pleasant results and that in the same time, are easy to be employed, and the use of which is nimble to be realized in other situations, obtaining, however, different and not similar results. The window dresser, the great part of times, has to improvise inventing, at the moment, solutions of several problems that always need a quick solution, using poor materials such as pins, small nails, nylon threads, adhesive tapes, etc., consequently not always the result is equal to the expectations, presenting itself poor or, at least, similar to other already seen shop-windows. This invention proposes, in its rational and functional realization, as an efficacious, new, original and cheap tool for the best preparation of shop-windows, stands, shows and so on, in which have to be shown clothes and not specified objects, of contained size and weight, such as: furs, coats, jackets, shirts, ties, handkerchiefs, scarfs, sweaters, cardigans, caps, hats, belts, etc. or, more, generally, lingerie, dressing-gowns, pijamas, cloths, fabrics, yarns, wool, carpets, curtains, bath or bed outfits, or every kind of soft material, like rubber, wood, etc.

Its use is linked to that one of panels (of every material, size, transparent or not, smooth or not) according to the effects that you want to obtain, applying the suction cup on the panels surfaces in the position and quantities you want.

These suction-cups have a pin point on which the shown material (or other) is easily stuck and, therefore, fixed, remaining, however, hanged to the suction cup and, consequently, to the panel. Choosing appropriately the disposition of the panels and of the suction cups with a pin, it's possible to create the most incredible, strange and fantastic compositions of the clothes shown, according to pratically unfailing forms and variants.

As the suction cups with a pin are, moreover, easily to be taken to pieces and to be reassembled on the panel, their disposition can be modified in little time, so the goods exibition can change, if not in its general foundation, at least in some particulars. The suction-cups are covered or not, hidden or not, by the clothes shown.

The sensation obtained is that the goods shown hang in the air, without weight; the effect is particularly suggestive and immediately calls the attention of the beholder, attracted by the unusual tridimensionality of the show which can also develope on more levels in sequence and variously inclined among them and not only one vertical level on the back.

The effect appears emphasized when tempered plate glass panels are used; the brightness and the transparence of this material, combined with a right lighting of the shop-window, highly emphasizes the visual sensations, obtaining unusual sensations, almost never achieved in shop-windows.

The tempered plate glass panels use justifies furthermore the use of the suction-cup with the pin: as it's impossible, of course, to use directly other suspension means such as little nails, drawing-pins, etc.; moreover, the suction-cup with a pin doesn't damage, in any way, with scratches, marks or other, the panel which can be indefinitely re-used.

Nothing forbids, of course, to use also panels of other materials, provided that they have the surfaces sufficiently smooth to guarantee the suction-cup with a pin tightness, such as: wood, chip wood, plastic materials, stained or not stained glasses, plexiglass, metals (inox, copper, alluminium, etc.) or wall facings (tiles, baked clays, porcelains, gres).

The effects obtained are different, every time, to harmonize with a certain products collection and create, in the beholder, suggestions of differentkind, from the happy to the serious, from the casual to the committed, from the dramatic to the witty, from the light and the fading to the redundant and the stately, etc. More particularly: this suction-cup with a pin is made, in its essentiality, by an elastic and yielding material membrane, set in the support bell which is fixed in the body for the pin.

In this body is obtained a specific room in which is set a common needle (pin) (with a spherical plastic head, or every other kind) that, when put in, protrudes from the body for the pin with the point making, in this way, a supporting and hanging point for the clothes on exibition.

The suction-cup with a pin is hinged with a cam lever that, turned, causes the adhesion of the suction-cup on the panel surface; while on the contrary, turned in the opposite direction, causes the immediate detaching of the suction-cup.

It's evident that the placing of one or more suction-cups with a pin on a supporting panel allows the more functional fixing of any fabric or other material, still being hidden by the fabric itself. This invention will be better understood by following the example and the enclosed drawings, which show it schematically.

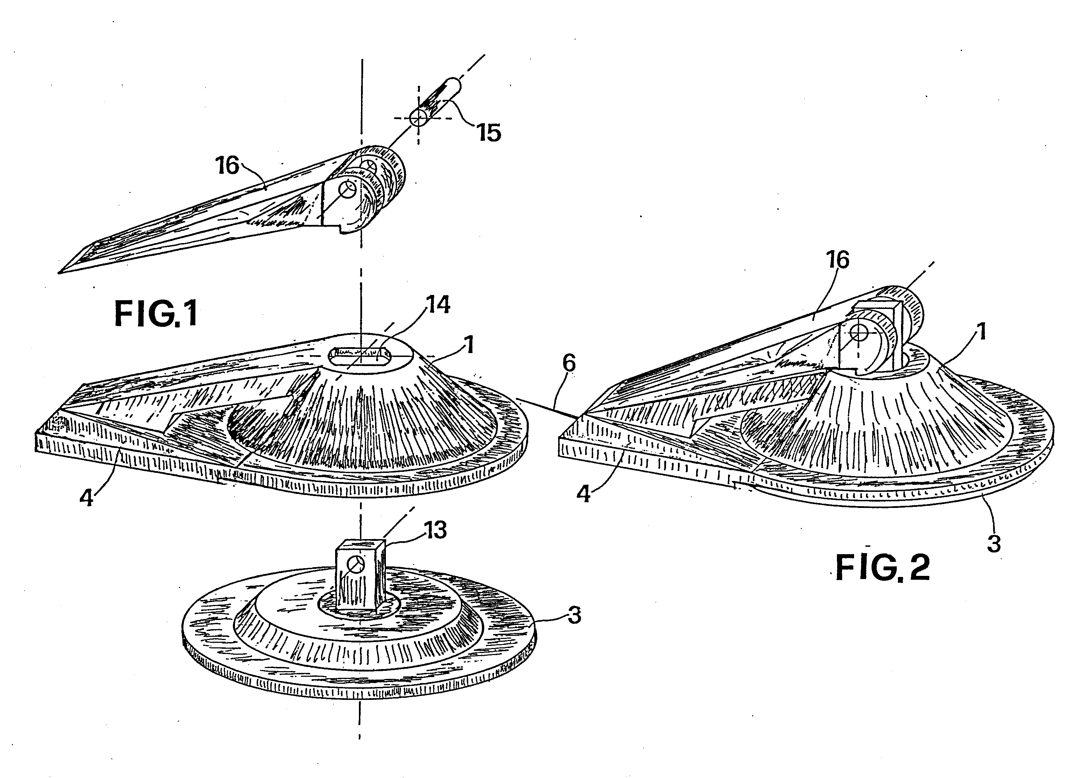

In table 1: Figure 1 shows all the parts of the suction-cup; Fig.2 shows the assembled suction-cup, in the shape taken when tied to the panel.

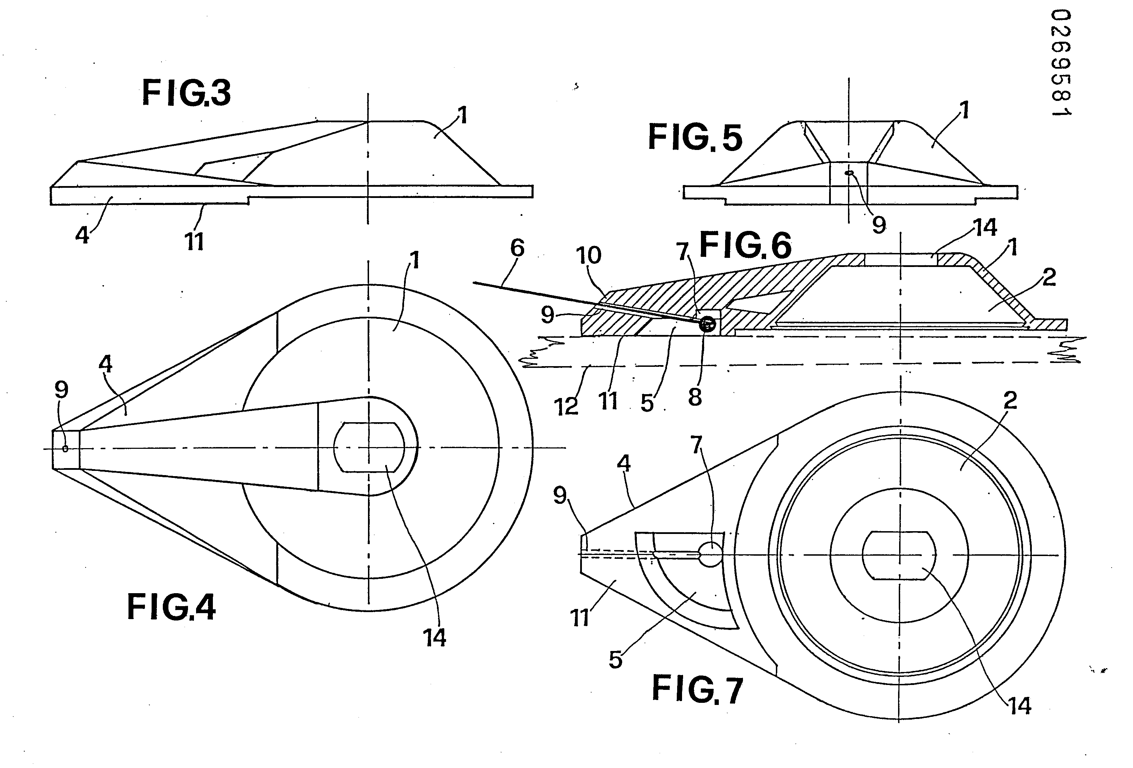

In table 2: Fig. 3 shows a side sight of the body of the suction-cup; Fig. 4 shows the plan sight of what drawn in Fig. 3; Fig. 5 shows the frontal sight of which drawn in Figs. 3 and 4; Fig. 6 shows the section in a vertical and longitudinal plan of the body of the suction-cup to show the room for the pin and the pin itself;

Fig. 7 shows the lower part of the body of the suction-cup.

More exactly: This suction-cup with a pin is made by a body 1, of frustum-conical shape, in which is obtained the room 2 of the membrane 3.

To the body 1 is connected a prominence 4, where is obtained, in the lower part, the room for the pin 5 in which pin 6 is placed; distinctive features of this room for the pin 5 are the circular seat 7 meant to receive the spherical pommel 8 of the above mentioned pin 6 and the hole 9 (from which protrudes towards the outside from end 10 and for some length the pin 6 itself).

The hole 9 has a certain inclination regarding the lower face 11 of protuberance 4.

This lower face 11, once tied the suction-cup to panel 12, shows itself sticking to panel 12 itself; the result is that pin 6 with spherical pommels 8 turns out inclined of a certain angle, regarding the surface of panel 12, and this to make easier the hanging and fixing (by pin 6 itself) of clothes, or other articles, to be shown.

The membrane 3 has a tang 13 passing through opening 14, obtained on the upper part of body 1.

On this tang 13 is hinged, by the pintle 15, the cam lever 16, turning which the suction-cup ties or detaches from the surface panel 12.

The protrusion 4 and the cam lever 16 have such sizes, connectors and facets that, when the suction-cup is tied, the ones are in connection with the others without having protrusions, but presenting theirselves like a close whole, of small sizes.

From made considerations, the particulars forming the suction-cup, except the membrane 3, can be made with any material (plastic, metallic, etc.) and in every size bearing in mind, of course, considerations of economic convenience and of quality or of the finished product weight, without going out from this invention limits.

**Claims**

1) Suction-cup with a pin put in, fitted to prop up some points of support for clothes on transparent or not transparent panels, particularly suitable to prepare shop-windows, shows, etc., characterized from being provided by a body (1), a membrane (3) and a cam lever (16), being hinged between them, these two last elements, through the pintle (15).

2) Suction-cup with a pin put in, according to the preceding claim, in which the body (1) has a prominence (4) where is obtained the room for the pin (5) designed to receive the spherical pommel (8) pin (6) which, after being threaded in the hole (9) protrudes with its point (inclined of a certain angle regarding the panel surface (12)) from the priminence (4), making it possible to hang on it the clothes to show.

3) Suction-cup with a pin put in, according to the preceding claims, in which the spherical pommel (8) pin (6) can be easily taken off from its room (5) and replaced with an other type.

4) Suction-cup with a pin put in, according to the preceding claims, to lay on panels (12) or surfaces in general, of the most different materials and variously arranged among them, to form some points of support for the things to show.

5) Suction-cup with a pin put in, according to the preceding claims, the whole as described and ad represented, in object, on the enclosed drawings.

**FIG.1**

16

15

14

1

4

13

3

6

16

1

4

3

**FIG.2**

0269581

FIG.3  FIG.4  FIG.5  FIG.6  FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-1 196 812  (PENDRED) <br> * Whole document * | 1,2,4,5 | F 16 B  47/00 <br> A 47 F   7/19 |
| A | | 3 | |
| Y | FR-A-1 569 052  (PLASTIQUES C.M.) <br> * Page 2; figures 1,5,6 * | 1,2,4,5 | |

TECHNICAL FIELDS SEARCHED (Int. Cl.4)

A 47 F
F 16 B
A 47 K
A 47 G
A 47 J
G 09 F

The present search report has been drawn up for all claims

| Place of search | Date of completion of the search | Examiner |
|---|---|---|
| THE HAGUE | 28-01-1988 | OFFMANN P.A. |